# EUROPEAN PATENT APPLICATION

(11) **EP 4 645 514 A1**
(43) Date of publication of application: **05.11.2025**
(21) Application number: 23912034.8
(22) Date of filing: 25.12.2023
(51) Int. Cl.: H01M 10/0587, H01M 50/536

(54) **CYLINDRICAL BATTERY**

(30) Priority: 27.12.2022 JP 2022210959
(71) Applicant: Panasonic Energy Co., Ltd., Osaka 570-8511 (JP)
(72) Inventor: SHIMA, Kaho, Osaka 571-0057 (JP); ISHIGURO, Tasuku, Osaka 571-0057 (JP); SASA, Tatsuro, Osaka 571-0057 (JP); TSUDA, Takao, Osaka 571-0057 (JP); MATSUMOTO, Katsumasa, Osaka 571-0057 (JP); ASADA, Yuki, Osaka 571-0057 (JP)
(74) Representative: Eisenführ Speiser
(86) International application number: PCT/JP2023/046341
(87) International publication number: WO 2024/143254

(57) **Abstract**

In a cylindrical battery that is one example of an embodiment of the present invention, a negative electrode (12) has a non-facing section (43) that is wound at least 0.75 laps on the winding-start side of an electrode body (14), a local-minimum section (X) where the inter-core distance between the non-facing section (43) and a second region (45) that faces the non-facing section (43) on the radially outer side of the electrode body (14) is minimized within a region where the angle θ from a positive-electrode start end (11x) to the winding-start side is 150° or less relative to the winding center (Z) of the electrode body (14), and a local-maximum section (Y) where the inter-core distance between the non-facing section (43) and the second region (45) is maximized within the range where the angle θ is 150° or less. The local-minimum section (X) is positioned closer to the positive-electrode start end (11x) than is the local-maximum part (Y). The inter-core distance (D2) in the local-maximum section (Y) is at least 1.4 times the inter-core distance (D1) in the local-minimum section (X).

## Description

### TECHNICAL FIELD

The present disclosure relates to a cylindrical battery.

### BACKGROUND ART

A cylindrical battery comprises a wound electrode assembly formed by spirally winding a positive electrode and a negative electrode with a separator interposed therebetween. A winding core of the electrode assembly typically has formed therein a cavity extending in the axial direction. Such a cavity functions as an exhaust passage for guiding a gas, which is generated when an abnormality occurs to the battery, toward a safety valve. For example, Patent Literature 1 discloses a cylindrical battery comprising a wound electrode assembly having, on the winding-start side of the electrode assembly, a non-opposing portion that has a negative electrode mixture layer formed on at least one surface of a negative electrode core, and is wound by a predetermined length or more without facing a positive electrode.

### CITATION LIST

### PATENT LITERATURE

PATENT LITERATURE 1: International Publication No. WO 2018/116876

### SUMMARY

According to the cylindrical battery of Patent Literature 1, the shape stability of the winding core portion improves, and an exhaust passage to be used upon occurrence of an abnormality is sufficiently secured. However, as a result of examination, the inventors have found that when a change in the volume of the negative electrode during charging and discharging has increased to a large degree with an increase in the capacity of the battery, for example, the non-opposing portion would come into contact with a portion of the negative electrode located on the outer side of the non-opposing portion, with the result that deformation of the electrode assembly becomes likely to occur at the opposing portions of the positive electrode and the negative electrode. Meanwhile, if a space of such a portion is increased to avoid the contact between the non-opposing portion and the portion located on the outer side thereof, deposition of lithium becomes likely to occur around the positive electrode start end.

The cylindrical battery according to the present disclosure is a cylindrical battery, comprising an electrode assembly, the electrode assembly having a positive electrode, a negative electrode including a core and a mixture layer, and a separator, the electrode assembly being formed by winding the positive electrode and the negative electrode with the separator interposed between the positive electrode and the negative electrode, in which the negative electrode has, on a winding-start side of the electrode assembly, a non-opposing portion that has the mixture layer formed on at least one surface of the core, and is wound 0.75 turn or more without facing the positive electrode, a minimum portion where an inter-core distance between the non-opposing portion and a second region facing the non-opposing portion on a radially outer side of the electrode assembly is minimum in a range of an angle of less than or equal to 150°, the angle being an angle from a positive electrode start end to a position in a direction of a winding-start side with respect to a winding center of the electrode assembly, and a maximum portion where an inter-core distance between the non-opposing portion and the second region is maximum in a range of an angle of less than or equal to 150°, the angle being an angle from the positive electrode start end to a position in the direction of the winding-start side with respect to the winding center of the electrode assembly, the minimum portion is located closer to the positive electrode start end than is the maximum portion, and the inter-core distance at the maximum portion is greater than or equal to 1.4 times the inter-core distance at the minimum portion.

With the cylindrical battery according to the present disclosure, it is possible to suppress the deformation of the electrode assembly at the opposing portions of the positive electrode and the negative electrode while suppressing the deposition of lithium.

### BRIEF DESCRIPTION OF DRAWING

FIG. 1 is a sectional view in the axial direction of a cylindrical battery as an example of an embodiment.
FIG. 2 is a view illustrating a partial cross-section in the radial direction of an electrode assembly as an example of an embodiment.
FIG. 3 is a view for describing a method for evaluating deformation of a plate.

### DESCRIPTION OF EMBODIMENTS

Hereinafter, an example of an embodiment of a cylindrical battery according to the present disclosure will be described in detail with reference to the drawings. Note that the cylindrical battery according to the present disclosure is not limited to the embodiment described below.

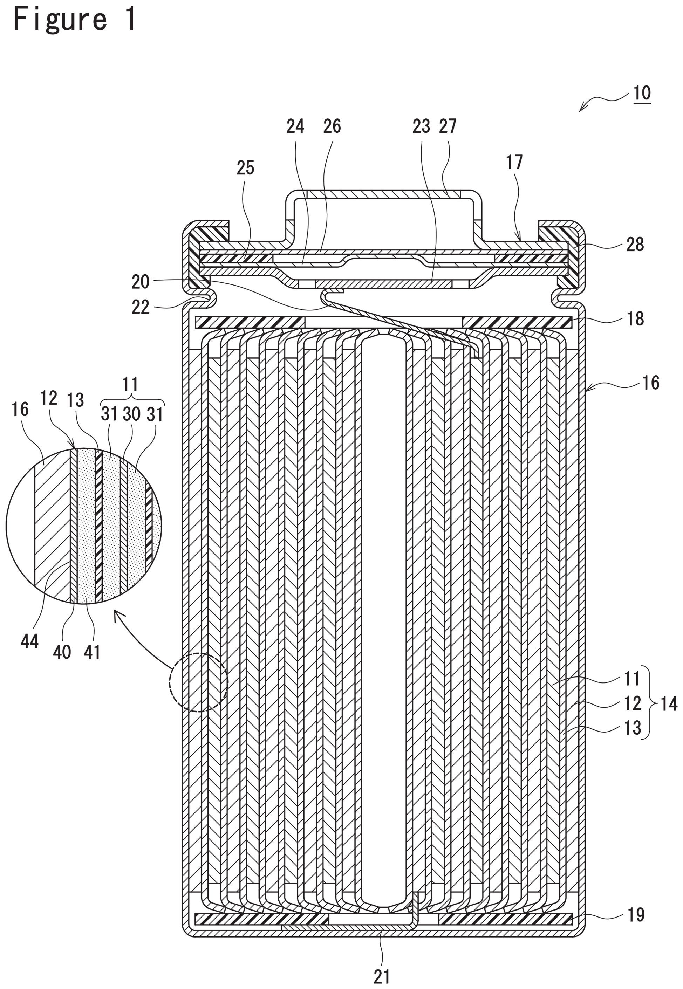

FIG. 1 is a sectional view of a cylindrical battery 10 as an example of an embodiment. As illustrated in FIG. 1, the cylindrical battery 10 comprises an electrode assembly 14 that has a positive electrode 11, a negative electrode 12, and a separator 13, and is formed by winding the positive electrode 11 and the negative electrode 12 with the separator 13 interposed therebetween. The cylindrical battery 10 also comprises a closed-bottomed cylindrical outer can 16 for housing the electrode assembly 14, and a sealing assembly 17 for closing an opening portion of the outer can 16. The outer can 16 houses an electrolyte together with the electrode assembly 14. The outer can 16 has a grooved portion 22 formed in its sidewall, and the sealing assembly 17 closes the opening portion of the outer can 16 while being supported on the grooved portion 22. Hereinafter, the sealing assembly 17 side of the cylindrical battery 10 shall be assumed as the upper side, while the bottom side of the outer can 16 shall be assumed as the lower side for the sake of convenience of description.

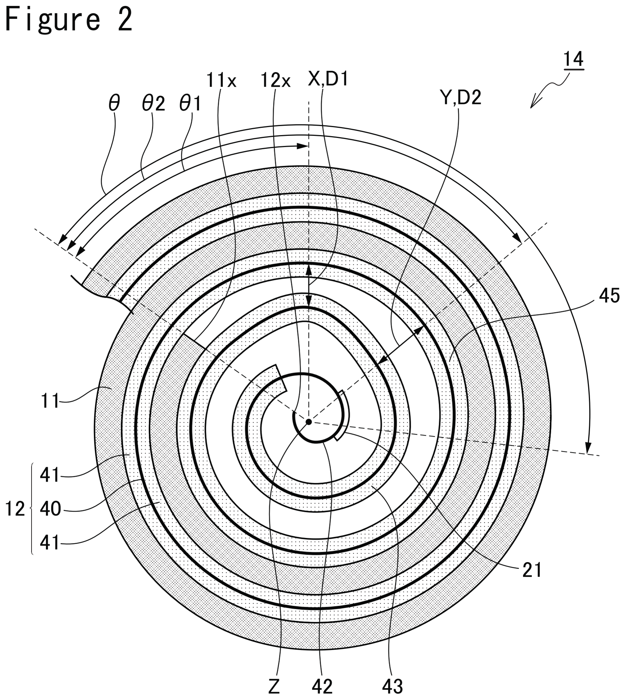

The details will be described later, but the negative electrode 12 has, on the winding-start side of the electrode assembly 14, a non-opposing portion 43 (see FIG. 2) that has a negative electrode mixture layer 41 formed on at least one surface of a negative electrode core 40, and is wound 0.75 turn or more without facing the positive electrode 11. The non-opposing portion 43 secures a winding core structure of the electrode assembly 14 with excellent shape stability, and the winding core has a cavity formed therein along the axial direction. The cavity of the winding core functions as an exhaust passage for guiding a gas, which is generated when an abnormality occurs to the battery, toward a safety valve. Setting the length of the non-opposing portion 43 to greater than or equal to 0.75 turn can stabilize the shape of the winding core, and can secure a sufficient cavity as an exhaust passage.

The electrolyte may be an aqueous electrolyte, but in the present embodiment, a non-aqueous electrolyte is used. The non-aqueous electrolyte has lithium ionic conductivity. The non-aqueous electrolyte may be either a liquid electrolyte (i.e., an electrolytic solution) or a solid electrolyte. The cylindrical battery 10 is a non-aqueous electrolyte secondary battery, for example, and is preferably a lithium-ion battery, in particular.

The liquid electrolyte (i.e., the electrolytic solution) contains a non-aqueous solvent and an electrolyte salt dissolved therein. As the non-aqueous solvent, esters, ethers, nitriles, amides, or a mixed solvent of two or more of them can be used, for example. Examples of the non-aqueous solvent include ethylene carbonate (EC), ethyl methyl carbonate (EMC), dimethyl carbonate (DMC), diethyl carbonate (DEC), and a mixed solvent thereof. The non-aqueous solvent may contain a halogen-substituted compound (e.g., fluoroethylene carbonate) obtained by substituting at least some of hydrogen atoms of such a solvent with halogen atoms, such as fluorine. As the electrolyte salt, a lithium salt, such as LiPF₆, is used, for example.

As the solid electrolyte, a solid or gel-like polymer electrolyte or an inorganic solid electrolyte can be used, for example. As the inorganic solid electrolyte, known materials for all-solid-state lithium-ion secondary batteries (e.g., an oxide-based solid electrolyte, a sulfide-based solid electrolyte, and a halogen-based solid electrolyte) can be used. The polymer electrolyte contains a lithium salt and a matrix polymer, or contains a non-aqueous solvent, a lithium salt, and a matrix polymer, for example. As the matrix polymer, a polymer material that turns into a gel by absorbing a non-aqueous solvent is used, for example. Examples of the polymer material include fluororesin, acrylic resin, and polyether resin.

As described above, the electrode assembly 14 has a wound structure obtained by spirally winding the positive electrode 11 and the negative electrode 12 with the separator 13 interposed therebetween. All of the positive electrode 11, the negative electrode 12, and the separator 13 are long, belt-like bodies, and are spirally wound so as to be alternately stacked in the radial direction of the electrode assembly 14. The negative electrode 12 is formed such that it has larger dimensions than the positive electrode 11 to prevent the deposition of lithium. That is, the negative electrode 12 is formed such that it is longer than the positive electrode 11 both in the longitudinal direction and the width direction. The separator 13 is formed such that it has larger dimensions than at least the positive electrode 11. For example, two separators 13 are arranged to sandwich the positive electrode 11 therebetween.

The electrode assembly 14 has a positive electrode lead 20 joined to the positive electrode 11, and a negative electrode lead 21 joined to the negative electrode 12. In the present embodiment, the positive electrode lead 20 is provided in the central portion in the longitudinal direction of the positive electrode 11, and at a position away from an end of the winding-start side and an end of the winding-finish side of the electrode assembly 14. Meanwhile, the negative electrode lead 21 is provided at one end portion in the longitudinal direction of the negative electrode 12 located on the winding-start side of the electrode assembly 14. The negative electrode 12 has a first core exposed portion 42 (see FIG. 2) corresponding to a portion from the negative electrode start end 12x, which is one end in the longitudinal direction, to the non-opposing portion 43, and having no negative electrode mixture layer 41. The negative electrode lead 21 is joined to the core exposed portion 42.

The positive electrode 11 has a positive electrode core 30, and a positive electrode mixture layer 31 formed on at least one surface thereof. As the positive electrode core 30, it is possible to use, for example, foil of metal that is stable in the potential range of the positive electrode 11, such as aluminum or aluminum alloy, or a film having such a metal arranged as a surface layer. The positive electrode mixture layer 31 contains a positive electrode active material; a conductive agent, such as acetylene black; and a binder, such as polyvinylidene fluoride (PVdF), and is preferably formed on the opposite sides of the positive electrode core 30. The thickness of the positive electrode mixture layer 31 is greater than or equal to 40 µm and less than or equal to 100 µm, for example. As the positive electrode active material, lithium transition metal composite oxide containing Ni, Co, Mn, Al, and the like is used, for example. Note that the positive electrode lead 20 is preferably directly joined to the positive electrode core 30 by ultrasound welding, for example.

The negative electrode 12 has the negative electrode core 40, and the negative electrode mixture layer 41 formed on at least one surface thereof. As the negative electrode core 40, it is possible to use, for example, foil of metal that is stable in the potential range of the negative electrode 12, such as copper or copper alloy, or a film having such a metal arranged as a surface layer. The negative electrode mixture layer 41 contains a negative electrode active material, and a binder, such as styrene-butadiene rubber (SBR), and is preferably formed on the opposite sides of the negative electrode core 40. The thickness of the negative electrode mixture layer 41 is greater than or equal to 40 µm and less than or equal to 100 µm, for example. As the negative electrode active material, graphite or a Si-containing material is used, for example. The negative electrode lead 21 is preferably directly joined to the negative electrode core 40 by ultrasound welding, for example.

The cylindrical battery 10 comprises an upper insulating plate 18 arranged between the sealing assembly 17 and an electrode group, and having an opening portion for passing the positive electrode lead 20. In this specification, the electrode group means a portion including the positive electrode 11, the negative electrode 12, and the separator 13 of the electrode assembly 14, excluding the positive electrode lead 20 and the negative electrode lead 21. The cylindrical battery 10 comprises a lower insulating plate 19 arranged between the inner surface of the bottom of the outer can 16 and the electrode group, and having an opening portion for passing the negative electrode lead 21.

In the example illustrated in FIG. 1, the positive electrode lead 20 extends toward the sealing assembly 17 through the opening portion of the upper insulating plate 18, while the negative electrode lead 21 extends toward the bottom of the outer can 16 through the opening portion of the lower insulating plate 19. The positive electrode lead 20 is connected to the lower surface of a bottom plate 23 of the sealing assembly 17 by welding, for example, so that the sealing assembly 17 serves as a positive electrode terminal. The negative electrode lead 21 is connected to the inner surface of the bottom of the outer can 16 by welding, for example, so that the outer can 16 serves as a negative electrode terminal.

The outermost peripheral surface of the electrode assembly 14 has the negative electrode 12 arranged thereon, and is provided with a second core exposed portion 44 where the surface of the negative electrode core 40 is exposed. The core exposed portion 44 abuts the inner peripheral surface of the outer can 16. As the core exposed portion 44 abuts the inner peripheral surface of the outer can 16, which serves as the negative electrode terminal, opposite end portions in the longitudinal direction of the negative electrode 12 and the outer can 16 are electrically connected so that excellent current collectability can be secured. The core exposed portion 44 may be provided on a part of the outermost peripheral surface of the electrode assembly 14, but is preferably provided on the entire outermost peripheral surface. For example, there is provided a portion where the negative electrode mixture layer 41 is not provided on the opposite sides of the negative electrode core 40, over a length of greater than or equal to one turn of the electrode assembly 14 from the winding-finish end of the negative electrode 12.

The outer can 16 is a closed-bottomed cylindrical metal container. A gasket 28 is provided between the outer can 16 and the sealing assembly 17 so that the inside of the battery is hermetically sealed. For example, the outer can 16 has the grooved portion 22 that is formed by pressing the side surface portion of the outer can 16 from its outer side, and is adapted to support the sealing assembly 17. The grooved portion 22 is preferably formed in an annular shape along the circumferential direction of the outer can 16, and the upper surface of the grooved portion 22 supports the sealing assembly 17. In addition, the upper end portion of the outer can 16 is bent inward, and is swaged to the peripheral portion of the sealing assembly 17.

The sealing assembly 17 has a structure in which the bottom plate 23, a lower vent member 24, an insulating member 25, an upper vent member 26, and a cap 27 are stacked in this order from the side of the electrode assembly 14. Each member of the sealing assembly 17 has a disc shape or a ring shape, for example, and members other than the insulating member 25 are electrically connected together. The lower vent member 24 and the upper vent member 26 are connected together at their central portions, and the insulating member 25 is provided between their peripheral portions. With an increase in the internal pressure of the battery, the lower vent member 24 deforms such that it pushes the upper vent member 26 toward the cap 27, and then ruptures, thereby blocking a current path between the lower vent member 24 and the upper vent member 26. With a further increase in the internal pressure, the upper vent member 26 ruptures so that a gas is discharged through an opening portion of the cap 27.

Hereinafter, the electrode assembly 14 will be described in detail with reference to FIG. 2. FIG. 2 is a sectional view in the radial direction of the winding core of the electrode assembly 14 and its periphery. In FIG. 2, the separator 13 is not illustrated for the purpose of clarification of the drawing. In addition, the positive electrode core 30 and the positive electrode mixture layer 31 are not illustrated, either.

As illustrated in FIG. 2, the negative electrode 12 of the electrode assembly 14 has, on the winding-start side of the electrode assembly 14, the non-opposing portion 43 that has the negative electrode mixture layer 41 formed on at least one surface of the negative electrode core 40, and is wound 0.75 turn or more without facing the positive electrode 11. The non-opposing portion 43, which has the negative electrode mixture layer 41 but does not face the positive electrode 11, does not contribute to charging or discharging of the battery. Meanwhile, the non-opposing portion 43 has high rigidity as it has the negative electrode mixture layer 41, and thus contributes to stabilizing the shape of the winding core portion of the electrode assembly 14, and secures an exhaust passage for a gas generated when an abnormality occurs to the battery. Note that a portion located closer to the winding-finish side of the electrode assembly 14 than the positive electrode start end 11x corresponds to each of the opposing portions of the positive and negative electrodes where the positive electrode 11 and the negative electrode 12 face each other with the separator 13 interposed therebetween.

In this specification, the positive electrode start end 11x means one end in the longitudinal direction of the positive electrode 11 located on the winding-start side (i.e., the winding core side) of the electrode assembly 14. Similarly, the negative electrode start end 12x means one end in the longitudinal direction of the negative electrode 12 located on the winding-start side of the electrode assembly 14. The negative electrode start end 12x is located closer to the winding center Z than is the positive electrode start end 11x.

In the non-opposing portion 43, the negative electrode mixture layer 41 may be formed on one of the inner peripheral surface of the negative electrode core 40, which faces the direction of the winding center Z, and the outer peripheral surface of the negative electrode core 40, which faces the direction of the sidewall of the outer can 16, but is preferably formed on both the inner peripheral surface and the outer peripheral surface. In such a case, the shape stability of the winding core portion further improves. The negative electrode mixture layer 41 is preferably formed on the opposite sides of the negative electrode core 40 at least in a region from a position corresponding to the positive electrode start end 11x to a maximum portion Y described below, and may be formed on the opposite sides of the negative electrode core 40 over the entire length of the non-opposing portion 43. The non-opposing portion 43 is preferably formed in a length of greater than or equal to 0.75 turn and less than or equal to 1.5 turn, for example, and more preferably, greater than or equal to 0.90 turn and less than or equal to 1.4 turn, and particularly preferably, greater than or equal to 1.0 turn and less than or equal to 1.3 turn. In such a case, an excellent exhaust passage can be easily secured in the winding core portion.

As described above, the negative electrode 12 has the core exposed portion 42 corresponding a portion from the negative electrode start end 12x to the non-opposing portion 43. The core exposed portion 42 is a portion not facing the positive electrode 11 as with the non-opposing portion 43, but is different from the non-opposing portion 43 in that it has no negative electrode mixture layer 41 and is formed of only the negative electrode core 40. In the present embodiment, the negative electrode lead 21 is joined to the core exposed portion 42. When the negative electrode lead 21 is arranged in the winding core portion of the electrode assembly 14, deformation is likely to occur at the opposing portions of the positive and negative electrodes during charging and discharging. However, according to the present embodiment, such deformation can be effectively suppressed.

The length of the core exposed portion 42 is not limited to a particular one, but is preferably greater than or equal to 0.5 turn from the perspective of securing the joint area of the negative electrode lead 21, for example. The core exposed portion 42 may be formed in a length of greater than or equal to 0.5 turn and less than or equal to 1.0 turn. The negative electrode lead 21 is a thin metal plate mainly composed of metal, such as nickel, for example, and has a thickness of greater than or equal to 50 µm and less than or equal to 100 µm. The negative electrode lead 21 is joined to the outer peripheral surface of the core exposed portion 42 at a position away from the negative electrode start end 12x and the non-opposing portion 43, for example.

As illustrated in FIG. 2, the negative electrode 12 has a minimum portion X and a maximum portion Y in the range of an angle θ, which is the angle from the positive electrode start end 11x with respect to the winding center Z of the electrode assembly 14, of less than or equal to 150°. The minimum portion X is a portion where the inter-core distance between the non-opposing portion 43 and a second region 45, which faces the non-opposing portion 43 on the radially outer side of the electrode assembly 14, is the minimum. The maximum portion Y is a portion where the inter-core distance between the non-opposing portion 43 and the second region 45 is the maximum. The minimum portion X is located closer to the positive electrode start end 11x than is the maximum portion Y. The positive electrode 11 is not provided between the non-opposing portion 43 and the second region 45.

The angle θ illustrated in FIG. 2 means the angle from a position where the positive electrode start end 11x overlaps the radial direction of the electrode assembly 14 to a position in the forward direction toward the winding-start side of the electrode assembly 14. In addition, the angle θ1 means the angle from the positive electrode start end 11x (i.e., the start point) to the minimum portion X, while the angle θ2 means the angle from the positive electrode start end 11x to the maximum portion Y.

In the electrode assembly 14, the distance between the positive and negative electrodes is substantially constant at the opposing portions of the positive electrode 11 and the negative electrode 12, but the distance between the non-opposing portion 43 and the second region 45 is not uniform. That is, the inter-core distance is substantially constant at the opposing portions of the positive and negative electrodes, but the inter-core distance varies at the opposing portions of the non-opposing portion 43 and the second region 45.

The distance (i.e., the inter-core distance) between the non-opposing portion 43 and the second region 45 preferably becomes gradually shorter in the direction of the minimum portion X from the position corresponding to the positive electrode start end 11x. The non-opposing portion 43 is gently curved such that it becomes closer to the second region 45 in the direction of the minimum portion X from the position corresponding to the positive electrode start end 11x. The distance between the non-opposing portion 43 and the second region 45 preferably becomes gradually longer in the direction of the maximum portion Y from the minimum portion X. The distance between the non-opposing portion 43 and the second region 45 becomes shorter once in the direction of the winding-start side of the electrode assembly 14 in the range of the angle θ of less than or equal to 150°, and then becomes longer again. The curvature of the non-opposing portion 43 is greater at a portion facing the minimum portion X than at the other portions, for example.

In such a case, the distance between the positive and negative electrodes around the positive electrode start end 11x is stabilized, which can suppress the deposition of lithium. In addition, it is also possible to suppress the deformation of the plates resulting from strong contact between the non-opposing portion 43 and the second region 45. It would be difficult to obtain such an effect only by setting the distance between the non-opposing portion 43 and the second region 45 to be nonuniform. However, it is possible to suppress both the deposition of lithium and the deformation of the plates by forming the minimum portion X and the maximum portion Y in this order from the side of the positive electrode start end 11x in the range of the angle θ of less than or equal to 150°.

The minimum portion X may be formed to allow the angle θ1 to be less than or equal to 150°. The angle θ1 is preferably less than or equal to 90°, and is more preferably less than or equal to 80°. The minimum portion X is preferably formed at a position away from the positive electrode start end 11x. Specifically, the angle θ1 is preferably greater than or equal to 30°, and is more preferably greater than or equal to 40°. The preferable range of the angle θ1 is, for example, greater than or equal to 40° and less than or equal to 80°, or greater than or equal to 50° and less than or equal to 70°. The foregoing effect becomes more significant if the angle θ1 is in such a range.

The maximum portion Y may be formed to allow the angle θ2 to be less than or equal to 150°. The angle θ2 is preferably greater than or equal to 95°, and is more preferably greater than or equal to 100°. Further, the angle θ2 is preferably less than or equal to 145°, and is more preferably less than or equal to 140°. The preferable range of the angle θ2 is, for example, greater than or equal to 100° and less than or equal to 140°, or greater than or equal to 110° and less than or equal to 130°. The foregoing effect becomes more significant if the angle θ2 is in such a range.

The inter-core distance D2 at the maximum portion Y is preferably greater than or equal to 1.4 times the inter-core distance D1 at the minimum portion X. In such a case, the foregoing effect becomes more significant. The inter-core distance D2 is more preferably greater than or equal to 1.5 times, and particularly preferably greater than or equal to 1.6 times the inter-core distance D1, though it differs to some degree depending on the other conditions, such as the angles θ1 and θ2, for example. The upper limit of the ratio of D2/D1 is not limited to a particular value, but from the perspective of securing an exhaust passage and productivity, for example, the inter-core distance D2 is preferably less than or equal to 2.2 times, and is more preferably less than or equal to 2.1 times the inter-core distance D1. The preferable range of D2/D1 is, for example, greater than or equal to 1.4 and less than or equal to 2.2.

The inter-core distance D1 at the minimum portion X is preferably less than or equal to 190 µm, more preferably, less than or equal to 180 µm, and particularly preferably, less than or equal to 170 µm. In such a case, the deposition of lithium can be easily suppressed. Meanwhile, at the minimum portion X, the non-opposing portion 43 is preferably not in contact with the second region 45, and the inter-core distance D1 is preferably greater than double the thickness of the negative electrode mixture layer 41. The preferable range of the inter-core distance D1 is, for example, greater than or equal to 120 µm and less than or equal to 180 µm, or greater than or equal to 130 µm and less than or equal to 170 µm.

The inter-core distance D2 at the maximum portion Y is preferably greater than or equal to 210 µm, more preferably, greater than or equal to 220 µm, and particularly preferably, greater than or equal to 230 µm. In such a case, the deformation of the electrode assembly 14 can be easily suppressed. Meanwhile, from the perspective of securing an exhaust passage and productivity, for example, the inter-core distance D2 is preferably less than or equal to 330 µm. The preferable range of the inter-core distance D2 is, for example, greater than or equal to 220 µm and less than or equal to 330 µm, or greater than or equal to 230 µm and less than or equal to 320 µm.

The electrode assembly 14 is fabricated by winding plates using a winding core member. Changing the tension (i.e., acceleration) during the winding of the plates can form the minimum portion X and the maximum portion Y, and can adjust the inter-core distance thereof. Specifically, the acceleration at a position corresponding to the maximum portion Y is set lower than the acceleration when a portion with a constant inter-core distance is wound, and the acceleration at a position corresponding to the minimum portion X is set higher than that. The inter-core distances D1 and D2 can be adjusted by adjusting the acceleration. For example, increasing the acceleration can reduce the inter-core distance.

The minimum portion X and the maximum portion Y can be identified from a CT image of the electrode assembly 14. The CT image of the electrode assembly 14 can be acquired using an X-ray CT system (SMX-225CT FPD HR manufactured by SHIMADZU CORPORATION).

### EXAMPLES

Hereinafter, the present disclosure will be further described by way of Experimental Examples, but the present disclosure is not limited thereto.

### <Example 1>

### [Fabrication of Positive Electrode]

As a positive electrode active material, lithium nickel oxide containing cobalt and aluminum (LiNi_{0.88}Co_{0.09}Al_{0.03}O₂) was used. A positive electrode mixture slurry was prepared by mixing the positive electrode active material, acetylene black, and polyvinylidene fluoride at a solid content mass ratio of 98:1:1, and by using N-methylpyrrolidone (NMP) as a dispersion medium. The slurry was applied to the opposite sides of a positive electrode core made of long aluminum foil with a thickness of 15 µm, and then, the coating was dried and compressed to obtain a positive electrode having a positive electrode mixture layer (the thickness on each side: 90 µm, and the density: 3.6 g/cm³) formed on the opposite sides of the positive electrode core. Note that the central portion in the longitudinal direction of the positive electrode was provided with a core exposed portion having no positive electrode mixture layer, and a positive electrode lead made of aluminum was ultrasonic-welded to the exposed portion.

### [Fabrication of Negative Electrode]

As a negative electrode active material, a mixed material containing graphite powder and a Si-containing material at a mass ratio of 95:5 was used. A negative electrode mixture slurry was prepared by mixing the negative electrode active material, dispersion of styrene butadiene rubber, and carboxymethylcellulose sodium at a solid content mass ratio of 98:1:1, and by using water as a dispersion medium. The slurry was applied to the opposite sides of a negative electrode core made of long copper foil with a thickness of 8 µm, and then, the coating was dried and compressed to obtain a negative electrode having a negative electrode mixture layer (the thickness on each side: 95 µm, and the density: 1.6 g/cm³) formed on the opposite sides of the negative electrode core. Note that regions of a predetermined length of the negative electrode from its opposite ends in the longitudinal direction were respectively provided with first and second core exposed portions having no negative electrode mixture layer, and a negative electrode lead made of nickel was ultrasonic-welded to the first core exposed portion.

### [Fabrication of Electrode Assembly]

A wound electrode assembly was obtained by spirally winding the foregoing positive electrode, the foregoing negative electrode, and a separator made of polyethylene using a cylindrical winding core member, and attaching fixing tape to the opposite end portions in the axial direction of the outermost peripheral surface. At this time, the negative electrode was arranged to allow the first core exposed portion, which has the negative electrode lead joined thereto, of the negative electrode to be located on the winding-start side of the electrode assembly. That is, the second core exposed portion of the negative electrode is located on the winding-finish side of the electrode assembly. In addition, the negative electrode was caused to extend beyond the positive electrode start end on the winding-start side of the electrode assembly so that a non-opposing portion not facing the positive electrode was provided. After the wound structure of the electrode assembly was formed, the winding core member was removed to obtain a wound electrode assembly having a cavity formed in its winding core portion.

In Experimental Example 1, the tension (i.e., acceleration) during the winding of the plates was changed to form the minimum portion X where the inter-core distance D1 is the minimum (210 µm) so as to allow the angle θ1 to be 60°, and form the maximum portion Y where the inter-core distance D2 is the maximum (300 µm) so as to allow the angle θ2 to be 120°.

### [Preparation of Non-Aqueous Electrolytic Solution]

A non-aqueous electrolytic solution was prepared by adding 5 parts by mass of vinylene carbonate (VC) into 100 parts by mass of a mixed solvent containing a mixture of ethylene carbonate (EC) and dimethyl carbonate (DMC) at a volume ratio of 1:3 (25°C), and then dissolving 1.5 mol/liter of LiPF₆ therein.

### [Fabrication of Cylindrical Battery]

Insulating plates were arranged above and below the foregoing electrode assembly, and then, a negative electrode lead was welded to the inner surface of the bottom of a closed-bottomed cylindrical outer can. Then, a positive electrode lead was welded to an internal terminal board of a sealing assembly, and the electrode assembly was housed within the outer can. After that, a non-aqueous electrolytic solution was injected into the outer can using a decompression method, and then, an opening portion of the outer can was sealed with the sealing assembly via a gasket so that a cylindrical battery was obtained. Note that a second core exposed portion of the negative electrode forms the outermost peripheral surface of the electrode assembly, and is in contact with the inner peripheral surface of the outer can.

### <Experimental Examples 2 to 9>

A cylindrical battery was fabricated in a manner similar to Experimental Example 1 except a point that the tension during the winding of the plates was changed to allow the positions (i.e., the angles θ1 and θ2) and the inter-core distances D1 and D2 of the minimum portion X and the maximum portion Y to have the values shown in Table 1.

### <Experimental Example 10>

A cylindrical battery was fabricated in a manner similar to Experimental Example 1 except a point that the plates were wound with the inter-core distance set constant so that the minimum portion X and the maximum portion Y was not formed.

### <Experimental Example 11>

A cylindrical battery was fabricated in a manner similar to Experimental Example 1 except a point that the tension during the winding of the plates was changed to allow the inter-core distance to become gradually shorter in the direction of the angle θ shown in FIG. 2 from 0° to 150°. In the electrode assembly of Experimental Example 11, the inter-core distance between the non-opposing portion and the second region is 210 µm at a position with the angle θ of 60°, and is 150 µm at a position with the angle θ of 150°.

### [Evaluation of Deformation of Plate (i.e., Presence or Absence of Buckling)]

Each of the batteries of the Experimental Examples was charged under a temperature environment of 45°C and with a constant current of 0.5 C until a battery voltage of 4.2 V was reached. After that, each battery was discharged with a constant current of 0.7 C until a battery voltage of 2.5 V was reached. After 200 cycles of such charging and discharging, the battery was set to the charged state, and then, a region around the winding core of the electrode assembly was observed with an X-ray CT system (SMX-225CT FPD HR manufactured by SHIMADZU CORPORATION).

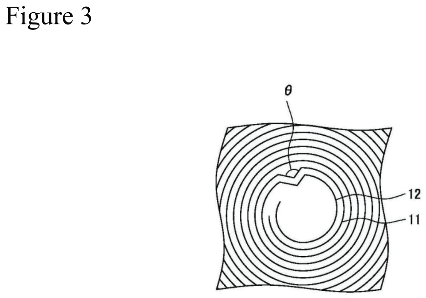

As shown in FIG. 3, regarding the opposing portions of the positive electrode and the negative electrode, the presence or absence of buckling was evaluated by determining that buckling is present when deformation (i.e., buckling) with an angle θ of less than or equal to 150° is confirmed in a plate (i.e., at least one of the positive electrode 11 and the negative electrode 12). Evaluation was performed for 100 batteries.

### [Evaluation of Deposition of Li]

Each battery was disassembled after the foregoing cycle test so that the presence or absence of white deposits (i.e., metal lithium) around the positive electrode start end was confirmed.

**[Table 1]**

| | Minimum Portion X | | Maximum Portion Y | | D2/D1 | Deposition of Li | Buckling |
|---|---|---|---|---|---|---|---|
| | θ1 (deg.) | D1 (µm) | θ2 (deg.) | D2 (um) | | | |
| Experimental Example 1 | 60 | 210 | 120 | 300 | 1.43 | 5 100 | 1/100 |
| Experimental Example 2 | 90 | 150 | 120 | 280 | 1.87 | 10 100 | 0/100 |
| Experimental Example 3 | 30 | 150 | 120 | 280 | 1.87 | 0/100 | 10/100 |
| Experimental Example 4 | 60 | 150 | 90 | 300 | 2.00 | 0/100 | 5/100 |
| Experimental Example 5 | 60 | 180 | 120 | 300 | 1.67 | 3/100 | 0/100 |
| Experimental Example 6 | 60 | 130 | 120 | 220 | 1.69 | 0/100 | 2/100 |
| Experimental Example 7 | 60 | 150 | 120 | 300 | 2.00 | 0/100 | 0/100 |
| Experimental Example 8 | 80 | 150 | 120 | 300 | 2.00 | 0/100 | 0 100 |
| Experimental Example 9 | 60 | 150 | 140 | 300 | 2.00 | 0/100 | 0 100 |
| Experimental Example 10 | - | 300 | - | 300 | 1.00 | 20 100 | 0/100 |
| Experimental Example 11 | Inter-Core Distance Becomes Shorter Toward Position at 150 | | | | 0.71 | 6/100 | 10/100 |

As shown in Table 1, regarding the batteries of Experimental Examples 1 to 9, deposition of lithium is less likely to occur in comparison with the battery of Experimental Example 10. In addition, regarding the batteries of Experimental Examples 1 to 9, buckling of the electrode assembly is less likely to occur in comparison with the battery of Experimental Example 11. That is, according to the cylindrical batteries of Experimental Examples 1 to 9, it is possible to effectively suppress the deformation of the electrode assembly at the opposing portions of the positive electrode and the negative electrode while suppressing the deposition of lithium. When the inter-core distance is constant around the winding core (Experimental Example 10), deposition of lithium is likely to occur around the positive electrode start end, while when the inter-core distance gradually becomes shorter in the direction of the winding center from a position corresponding to the positive electrode start end (Experimental Example 11), deposition of lithium can be suppressed more in comparison with the battery of Experimental Example 10, but buckling of the plates is more likely to occur.

The present disclosure will be further described by way of the following embodiments.

Configuration 1: A cylindrical battery, comprising an electrode assembly, the electrode assembly having a positive electrode, a negative electrode including a core and a mixture layer, and a separator, the electrode assembly being formed by winding the positive electrode and the negative electrode with the separator interposed between the positive electrode and the negative electrode, in which the negative electrode has, on a winding-start side of the electrode assembly, a non-opposing portion that has the mixture layer formed on at least one surface of the core, and is wound 0.75 turn or more without facing the positive electrode, a minimum portion where an inter-core distance between the non-opposing portion and a second region facing the non-opposing portion on a radially outer side of the electrode assembly is minimum in a range of an angle θ of less than or equal to 150°, the angle θ being an angle from a positive electrode start end to a position in a direction of a winding-start side with respect to a winding center of the electrode assembly, and a maximum portion where an inter-core distance between the non-opposing portion and the second region is maximum in a range of an angle θ of less than or equal to 150°, the angle θ being an angle from the positive electrode start end to a position in the direction of the winding-start side with respect to the winding center of the electrode assembly, the minimum portion is located closer to the positive electrode start end than is the maximum portion, and the inter-core distance at the maximum portion is greater than or equal to 1.4 times the inter-core distance at the minimum portion.

Configuration 2: The cylindrical battery according to Configuration 1, in which the minimum portion is formed in a range of an angle of greater than or equal to 40° and less than or equal to 80°, the angle being an angle from the positive electrode start end to a position in the direction of the winding-start side with respect to the winding center of the electrode assembly.

Configuration 3: The cylindrical battery according to Configuration 1 or 2, in which the maximum portion is formed in a range of an angle of greater than or equal to 100° and less than or equal to 140°, the angle being an angle from the positive electrode start end to a position in the direction of the winding-start side with respect to the winding center of the electrode assembly.

Configuration 4: The cylindrical battery according to any one of Configurations 1 to 3, in which the inter-core distance at the minimum portion is less than or equal to 170 µm, and the inter-core distance at the maximum portion is greater than or equal to 230 µm.

Configuration 5: The cylindrical battery according to any one of Configurations 1 to 4, in which the inter-core distance at the maximum portion is less than or equal to 2.2 times the inter-core distance at the minimum portion.

Configuration 6: The cylindrical battery according to any one of Configurations 1 to 5, in which the electrode assembly has a negative electrode lead, and the negative electrode lead is joined to a core exposed portion, the core exposed portion being a portion from a negative electrode start end to the non-opposing portion, and having no mixture layer.

### REFERENCE SIGNS LIST

10 Cylindrical battery, 11 Positive electrode, 11x Positive electrode start end, 12 Negative electrode, 12x Negative electrode start end, 13 Separator, 14 Electrode assembly, 16 Outer can, 17 Sealing assembly, 18 Upper insulating plate, 19 Lower insulating plate, 20 Positive electrode lead, 21 Negative electrode lead, 22 Grooved portion, 23 Bottom plate, 24 Lower vent member, 25 Insulating member, 26 Upper vent member, 27 Cap, 28 Gasket, 30 Positive electrode core, 31 Positive electrode mixture layer, 40 Negative electrode core, 41 Negative electrode mixture layer, 42, 44 Core exposed portion, 43 Non-opposing portion, 45 Second region, X Minimum portion, Y Maximum portion

## Claims

1. A cylindrical battery, comprising:
an electrode assembly, the electrode assembly having a positive electrode, a negative electrode including a core and a mixture layer, and a separator, the electrode assembly being formed by winding the positive electrode and the negative electrode with the separator interposed between the positive electrode and the negative electrode, wherein
the negative electrode has
on a winding-start side of the electrode assembly, a non-opposing portion that has the mixture layer formed on at least one surface of the core, and is wound 0.75 turn or more without facing the positive electrode,
a minimum portion where an inter-core distance between the non-opposing portion and a second region facing the non-opposing portion on a radially outer side of the electrode assembly is minimum in a range of an angle of less than or equal to 150°, the angle being an angle from a positive electrode start end to a position in a direction of a winding-start side with respect to a winding center of the electrode assembly, and
a maximum portion where an inter-core distance between the non-opposing portion and the second region is maximum in a range of an angle of less than or equal to 150°, the angle being an angle from the positive electrode start end to a position in the direction of the winding-start side with respect to the winding center of the electrode assembly,
the minimum portion is located closer to the positive electrode start end than is the maximum portion, and
the inter-core distance at the maximum portion is greater than or equal to 1.4 times the inter-core distance at the minimum portion.

2. The cylindrical battery according to claim 1, wherein the minimum portion is formed in a range of an angle of greater than or equal to 40° and less than or equal to 80°, the angle being an angle from the positive electrode start end to a position in the direction of the winding-start side with respect to the winding center of the electrode assembly.

3. The cylindrical battery according to claim 1, wherein the maximum portion is formed in a range of an angle of greater than or equal to 100° and less than or equal to 140°, the angle being an angle from the positive electrode start end to a position in the direction of the winding-start side with respect to the winding center of the electrode assembly.

4. The cylindrical battery according to claim 1, wherein
the inter-core distance at the minimum portion is less than or equal to 170 µm, and
the inter-core distance at the maximum portion is greater than or equal to 230 µm.

5. The cylindrical battery according to claim 1, wherein the inter-core distance at the maximum portion is less than or equal to 2.2 times the inter-core distance at the minimum portion.

6. The cylindrical battery according to any one of claims 1 to 5, wherein
the electrode assembly has a negative electrode lead, and
the negative electrode lead is joined to a core exposed portion, the core exposed portion being a portion from a negative electrode start end to the non-opposing portion, and having no mixture layer.
